# EUROPÄISCHE PATENTSCHRIFT

(11) **EP 3 385 015 B1**
(45) Veröffentlichungstag und Bekanntmachung des Hinweises auf die Patenterteilung: **07.08.2019**
(21) Anmeldenummer: 17164900.7
(22) Anmeldetag: 05.04.2017
(51) Int. Cl.: B23B 31/10, B23B 31/16, B23B 31/28, B23Q 1/00, B23Q 1/52

(54) **SPANNVORRICHTUNG, INSBESONDERE SPANNFUTTER**
CLAMPING DEVICE, IN PARTICULAR A CLAMPING JAW
DISPOSITIF DE SERRAGE, EN PARTICULIER ÉTAU

(43) Veröffentlichungstag der Anmeldung: 10.10.2018
(73) Patentinhaber: SMW-AUTOBLOK Spannsysteme GmbH, 88074 Meckenbeuren (DE)
(72) Erfinder: Maurer, Eckhard, 88094 Oberteuringen (DE)
(74) Vertreter: Engelhardt, Volker

(56) Entgegenhaltungen:
- EP-A1- 3 028 804
- WO-A1-2005/063437
- US-A1- 2011 006 490

## Beschreibung

Die Erfindung bezieht sich auf eine Spannvorrichtung zur Abstützung von rotationssymmetrischen Werkstücken nach dem Oberbegriff des Patentanspruches 1, das aus dem Dokument EP3028804A1 bekannt ist.

Solche Spannvorrichtungen sind in vielfacher unterschiedlich konstruktiver Ausprägung bekannt und können beispielsweise der EP 2676756 A1 entnommen werden. Diese Spannvorrichtungen dienen im Wesentlichen dazu, ein vorzugsweise rotationssymmetrisches Werkstück im Raum zentrisch zu einer Längsachse einer Werkzeugmaschine zu lagern, so dass dieses möglichst exakt bearbeitet werden kann, um die Bearbeitungsfehlertoleranzen so gering wie möglich zu halten. Zur Abstützung der Werkstücke sind mindestens drei Spannbacken vorzusehen, die in einer der Stirnseite des Futterkörpers des Spannfutters eingearbeitete Führungsbahnen verschiebbar gelagert sind. Diese Spannbacken werden üblicherweise mittels eines Betätigungskolbens, der beispielsweise pneumatisch oder hydraulisch betrieben ist, synchron bewegt, so dass diese gleichzeitig auf die Oberfläche des einzuspannenden Werkstückes auftreffen und dieses aufgrund der Zustellkraft des Betätigungskolbens einspannen.

Da durch die Spannbacken oder Drahtstücken eine Zentrierung des einzuspannenden Werkstückes oftmals nicht derart exakt über den gesamten Zeitraum der Bearbeitung vorgenommen werden kann, ist eine Nachjustierung des Werkstückes möglichst koaxial zu der Längsachse des Futterkörpers ausgerichtet erforderlich.

Während des Bearbeitungsvorganges rotiert das Spannfutter und die Elektromotoren über eine konstante Spannkraft auf das Werkstück aus. Eine Veränderung der Position der Spannbacken ist während des Bearbeitungsvorganges nicht möglich. Durch den Bearbeitungsvorgang reduziert sich das Eigengewicht des Werkstückes oftmals in einem Maße, das dazu führt, dass die zentrische Position des eingespannten Werkstückes verlorengeht. Folglich ist anschließend durch die Spannbacken erneut eine exakte Ausrichtung des Werkstückes einzustellen. Solche Zentrierungsvorgänge benötigen einen erhöhten Energiebedarf.

Aus der EP 3 059 036 A1 ist ein Spannfutter mit Elektromotoren bekannt geworden, wobei jeder Elektromotor einer der radial in dem Spannfutter Körper gelagerten Spannbacken antreibt. Die Energie zuvor für den jeweiligen Elektromotor ist mittels einer Induktivitäts-Einrichtung bewerkstelligt, die im Stillstand des Spannfutters über eine Steckverbindung mit einer Stromquelle gekoppelt ist. Sobald das Spannfutter rotiert, bezieht die Induktivitäts-Einrichtung die für den Betrieb der jeweiligen Elektromotoren erforderliche Energie oder Spannung ausschließlich durch induktive Energieübertragungen. Dabei ist die Induktivitäts-Einrichtung aus zwei elektrischen Bauteilen gebildet, nämlich einer außerhalb des Spannfutterkörpers angeordnete Übertragungs- und eine dem Spannfutterkörper zugeordnete Aufnahme-Einrichtung.

Es hat sich herausgestellt, dass der Energiebedarf für die Betätigung der Elektromotoren während des Stillstandes des Spannfutters ohne weiteres mit ausreichender Energie von der Stromquelle betrieben werden kann. Die Betätigung der jeweiligen Spannbacken benötigt dabei eine möglichst hohe Zustellgeschwindigkeit gepaart mit einer geringen Spannkraft, da die Spannbacken noch nicht in Wirkkontakt mit dem einzuspannenden Werkstück stehen. Sobald zwischen den Spannbacken und dem Werkstück eine Berührung vorliegt, sollen die Elektromotoren einen anderen Betriebsmodus aufweisen, durch den sichergestellt ist, dass die Betätigungskraft der Spannbacken möglichst grob und die Zustellgeschwindigkeit möglichst gering bemessen ist. Für solche Betriebszustandsänderungen der Elektromotoren werden unterschiedliche Energiezustände benötigt.

Nachteiliger Weise kann der jeweilige Elektromotor, insbesondere während der Rotation des Spannfutter, nicht mit ausreichender Energie versorgt werden, die ausschließlich durch die Induktivitäts-Einrichtung zur Verfügung gestellt ist, da dazugehörige Parameter begrenzt sind.

Es ist daher Aufgabe der Erfindung, eine Spann-Vorrichtung der eingangs genannten Gattung derart weiterzubilden, dass für den Betrieb des jeweiligen Elektromotors, der im Inneren der Spann-Vorrichtung angeordnet ist, eine ausreichende Energie oder Spannung vorhanden ist, um verschiedene Betriebszustände an dem jeweiligen Elektromotor einstellen zu können, ohne dass der Energie- oder Spannungsbedarf durch die Induktivitäts-Einrichtung begrenzt ist.

Diese Aufgaben sind erfindungsgemäß durch die Merkmale des kennzeichnenden Teils des Patentanspruch 1 gelöst.

Weitere vorteilhafte Weiterbildungen der Erfindung ergeben sich aus den Unteransprüchen.

Dadurch, dass erfindungsgemäss in dem Gehäuse mindestens eine Energiespeichereinrichtung vorgesehen ist, die elektrisch mit dem jeweiligen Elektromotor verbunden ist, und dass die jeweilige Energiespeichereinrichtung mit der Induktions-Einrichtung elektrisch gekoppelt ist, kann der Energie- oder Spannungsbedarf der Elektromotoren ausreichend gedeckt werden. Die sich einstellenden Spannungsspitzen werden nämlich von der Energiespeichereinrichtung und der Induktivitäts-Einrichtung aufgefangen.

In der Zeichnung sind zwei erfindungsgemäße Ausführungsbeispiele eines Spannfutters dargestellt, die nachfolgend näher erläutert sind. Im Einzelnen zeigt:
- Figuren 1a und 1b: zwei Ausführungsbeispiele einer Spann-Vorrichtung, mit einem Futterkörper in dessen Stirnseite drei Führungsbahnen eingearbeitet sind, mit drei Spannbacken, die einzeln in einer der Führungsbahnen verschiebbar eingesetzt sind und mit drei der jeweiligen Spannbacken zugeordneten Elektromotoren, durch die die Spannbacken in ihrer Position verstellbar sind und mit einer Steuereinheit, durch die die Elektromotoren regelbar sind sowie mit einer Induktivitäts-Einrichtung, durch die die jeweiligen Elektromotoren mit Spannung versorgt sind,
- Figur 2a: die Spann-Vorrichtung gemäß Figur 1a, entlang der Schnittlinie IIa-IIa und mit nicht erfinderischen in dem Futterkörper eingebauten Akkumulatoren als Energiespeichereinrichtung,
- Figur 2b: die Spann-Vorrichtung gemäß Figur 1b entlang der Schnittlinie IIb-IIb, mit drei im Futterkörper eingebauten Kondensatoren als Energiespeichereinrichtung, wobei diese Energiespeichereinrichtungen kompatibel mit der Vorrichtung der Erfindung sind.
- Figuren 3a und 3b: Schaltpläne für den elektrischen Zusammenschluss der Akkumulatoren bzw. Kondensatoren mit dem jeweiligen Elektromotor und der Steuereinheit, wobei diese Energiespeichereinrichtungen kompatibel mit der Vorrichtung der Erfindung sind.

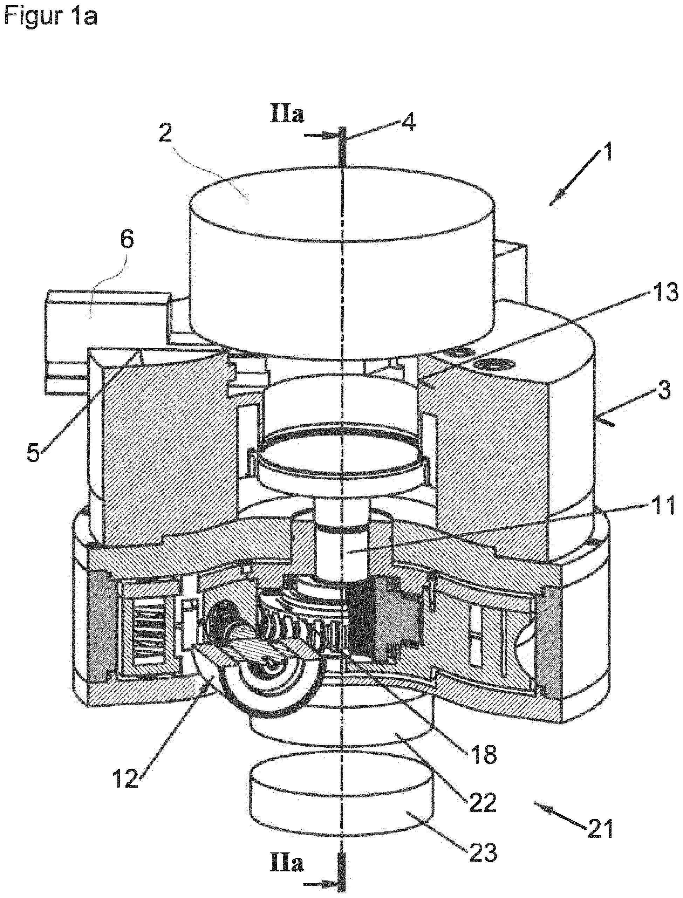

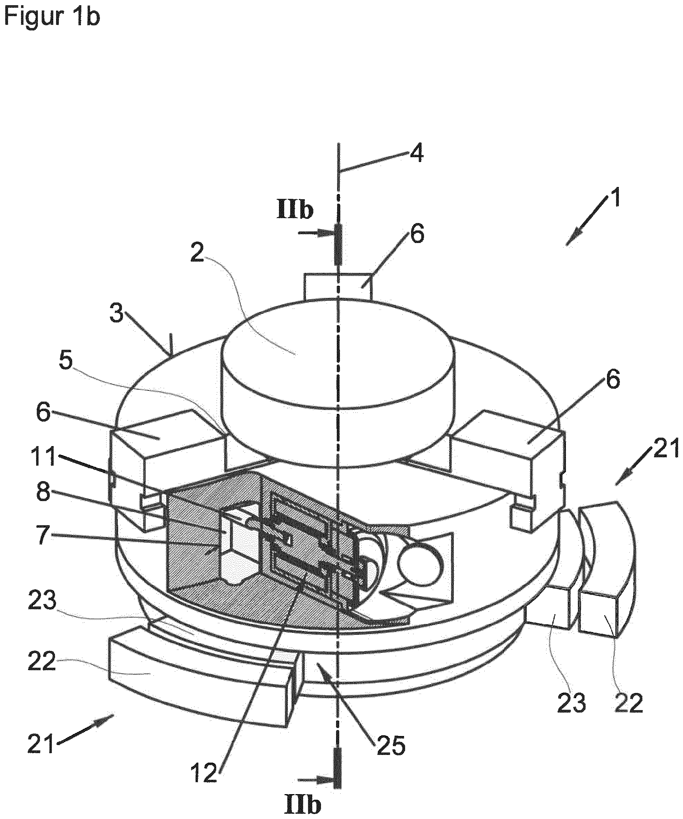

Aus den Figuren 1 bis 3b ist eine Spann-Vorrichtung 1 insbesondere Spannfutter zu entnehmen, die dazu dient, rotationssymmetrische Werkstücke 2 im Raum an einer nicht dargestellten Werkzeugmaschine zu halten und koaxial zu diesen zu positionieren. Die Spann-Vorrichtung 1 besteht aus einem rotationssymmetrischen Futterkörper 3, dessen Längsachse mit der Bezugsziffer 4 versehen ist. Zur Bearbeitung des Werkstückes 2 ist es gemäß der Erfindung erforderlich, dieses exakt fluchtend zu der Längsachse 4 des Futterkörpers 3 zu positionieren bzw. auszurichten. Wenn nämlich die Längsachse des Werkstückes 2 nicht fluchtend zu der Längsachse 4 des Futterkörpers 3 verläuft, entstehen während des Bearbeitungsvorganges Herstellungsfehler. Durch das erfindungsgemäße Spannfutter 1 soll demnach nicht nur die fluchtende Ausrichtung des Werkstückes 2 zu der Längsachse 4 des Futterkörpers 3 mit möglichst wenig zeitlichem und konstruktivem Aufwand einstellbar sein, sondern durch das Spannfutter 1 soll das Werkstück 2 während des Spannzustandes lageorientiert zu verstellen bzw. dessen Ausrichtung soll nachjustierbar sein, ohne den Spannzustand lösen zu müssen.

In einer der Stirnseiten des Futterkörpers 3 sind drei radial bzw. in Richtung der Längsachse 4 verlaufende Führungsbahnen 5 eingearbeitet. In jede der Führungsbahnen 5 ist eine Spannbacke 6 verschiebbar gelagert. An der in Richtung des Futterkörpers 3 weisende Unterseite der jeweilige Spannbacke 6 ist eine Schrägverzahnung 9 angearbeitet, die in formschlüssiger Wirkverbindung mit einer Keilstange 8 steht. Die Keilstange 8 ist verschiebbar in einer Aufnahmeöffnungen 7 des Futterkörpers 3 gelagert, die in dem Futterkörper 3 eingearbeitet sind. Es ist auch denkbar, die Keilstange 8 durch Keilhaken oder andersartig ausgestaltete Kraftübertragungsmittel zu ersetzen.

Die Keilstange 8 weist eine Schrägverzahnung 10 auf, die in trieblicher bzw. formschlüssiger Wirkverbindung mit der Schrägverzahnung 9 der jeweiligen Spannbacke 6 steht, so dass bei der Betätigung bzw. Bewegung der Keilstange 8 eine Relativbewegung zwischen dieser und der Spannbacke 6 entsteht, durch die die Spannbacke 6 in Richtung der Längsachse 4 des Futterkörpers 3 oder entgegengesetzt dazu bewegbar ist.

Zur Betätigung der jeweiligen Keilstange 8 ist in dem Futterkörper 3 jeweils eine diesen Keilstangen 8 zugeordneten Gewindespindel 11 vorgesehen, die sowohl mit der jeweiligen Keilstange 8 als auch mit einem im Inneren des Futterkörpers 3 eingebauten Elektromotors 12 steht. Dabei ist jeder der drei Spannbacken 6 jeweils einer der Elektromotoren 12 zugeordnet, so dass über jeden Elektromotor 12 eine der Spannbacken 6 vereinzelt bewegbar bzw. antreibbar ist. Die Gewindespindeln 11 und die Keilstangen 8 dienen zur Kraftübertragung des Drehmomentes von dem Elektromotor 12 auf die Spannbacke 6.

Jeder der Elektromotoren 12 ist über eine elektrische Leitung 14 mit einer Steuereinheit 24, die außerhalb des Futterkörpers 3 angeordnet ist, verbunden. Um die Elektromotoren 12, die als Antriebsmittel für die Spannbacken 6 benutzt werden, mit ausreichender Spannung bzw. Energie zu versorgen, ist jeder der Leitungen 14 eine Steckverbindung 16 zugeordnet, die im Stillstandszustand der Werkzeugmaschine über einen Stecker und elektrischen Leitungen 14 mit einer Stromquelle verbunden ist. Durch die Stromquelle 15 wird demnach die notwendige Energie an die Elektromotoren 12 abgegeben, die notwendig ist, um den Spannzustand für die Spannbacken 6 bzw. den Entriegelungsvorgang der Spannbacken 6 herbeizuführen. Insbesondere beim Wechseln des Werkstückes 2 aus dem Spannfutter 1 steht dieses still, so dass der Futterkörper 3 nicht rotiert, so dass die Steckverbindungen 16 zwischen der Stromquelle 15 und den drei Elektromotoren 12 vorgenommen werden kann.

Während des Bearbeitungsvorganges rotiert der Futterkörper 3 des Spannfutters 1, so dass dann die Steckverbindung 16 zwischen dem Futterkörper 3 und der Stromquelle 15 zu lösen ist. Während der Rotation des Futterkörpers 3 ist jedoch zu gewährleisten, dass die Spannkraft, die von den Spannbacken 6 auf das eingespannte Werkstück 2 weiterhin ausgeübt wird bzw. verloren geht. Zu diesem Zweck ist zunächst jeder Spannbacke 6 eine Kraftspeichereinrichtung 31, die in Form einer Schraubendruckfeder 32 ausgestaltet ist, zugeordnet. Die Kraftspeichereinrichtung 31 übt demnach eine Spannkraft auf die Spannbacken 6 aus, die über die Gewindespindel 11 und die Keilstange 8 übertragen ist. Das Drehmoment des Elektromotors 12 ist dabei größer bemessen, als die Spannkraft der jeweiligen Schraubendruckfeder 32. Folglich kann der Elektromotor 12 entgegen der Federkraft der Schraubendruckfeder 32 diese betätigen und die Gewindespindel 11, die Keilstange 8 und folglich auch die jeweilige Spannbacke 6 in Richtung der Längsachse 4 des Futterkörpers 3 oder entgegengesetzt zu dieser bewegen.

Um eine Positionsveränderung der Spannbacken 6 während des Spannzustandes vornehmen zu können, ohne dass die Steckverbindung 16 zwischen den Elektromotoren 12 und der Stromquelle 15 herzustellen ist, sind drei Induktivitätseinrichtungen 21 vorgesehen, die aus einem der Werkzeugmaschine, also außerhalb des Futterkörpers 3, zugeordnete Kopplungsteil 22 und einem im Inneren des Futterkörpers 3 angeordneten Ladeteil 23 bestehen. Die Kopplungsteile 22 und Ladeteile 23 weisen eine Vielzahl von Windungen auf, so dass, wenn den Kopplungsteilen 22 und den Ladeteilen 23 im Stillstand der Werkzeugmaschine fluchtend übereinander liegen, eine bestimmte Energieübertragung stattfinden kann, durch die die jeweiligen Elektromotoren 12 mit ausreichender Energie zur Positionsveränderung der Spannbacken 6 betrieben sind.

Durch die Steuereinrichtung 24 können demnach die Induktivitätseinrichtungen 21, also das Kopplungsteil 22 und das Ladeteil 23, individuell betrieben werden, so dass die jeweiligen Elektromotoren 12, die ebenfalls mit der Steuereinrichtung 24 gekoppelt sind, abwechselnd oder gleichzeitig in Richtung der Längsachse 4 des Futterkörpers 3 oder entgegengesetzt dazu bewegbar sind. Folglich kann durch die individuelle Positionsveränderung der Spannbacken 6 über den Betrieb des jeweiligen Elektromotors 12 sowohl eine Zentrierung des Werkstückes 2 bezogen auf die Längsachse 4 des Futterkörpers 3 erfolgen, als auch eine ausreichende Spannkraft zur Abstützung des zu haltenden Werkstückes 2 permanent zur Verfügung gestellt werden, denn die Position der Gewindespindel 11 und damit der Keilstange 8 und der Spannbacke 6 wird über die Kraftspeichereinrichtung 31 vorgegeben. Eine Positionsveränderung der Gewindespindel 11 ist ausschließlich mit Hilfe des jeweiligen Elektromotors 12 möglich.

In den Figuren 1 bis 3b sind zwei alternative Ausgestaltungsmöglichkeiten der Spann-Vorrichtung 1 zu entnehmen. Zum einen kann jeder der drei abgebildeten Elektromotoren 12 über die Steckverbindung 16 mit der Stromquelle 15 elektrisch gekoppelt sein, so dass im Stillstandszustand des Futterkörpers 3 die erforderliche elektrische Bestromung der Elektromotoren 12 von der Stromquelle 15 abgenommen ist. Dadurch werden die jeweiligen Spannbacken 6 in den Führungsbahnen 5 des Futterkörpers 3 geöffnet bzw. geschlossen, um den Spannzustand zu erreichen.

Eine weitere Alternative für die Bestromung der Elektromotoren 12 erfolgt zum anderen über die Induktivitäts-Einrichtung 21, deren Kopplungsteil 22 der Werkzeugmaschine zugeordnet und dessen Ladeteil 23 dem Futterkörper 3 angeordnet ist. Folglich kann die Bestromung der Elektromotoren 12 sowohl im Stillstandszustand des Futterkörpers 3 als auch im Rotationszustand bzw. im Spannungszustand der Spannbacken 6 vorgenommen werden, da zwischen dem Lade- und Kopplungsteil 22, 23 ein Luftspalt vorgesehen ist, so dass zwischen dem Futterkörper 3 und der Induktivitäts-Einrichtung 21 keine Reibung herrscht.

Sobald die drei Elektromotoren 12 von der Stromquelle 15 entkoppelt sind, erhalten diese ausschließlich über die Induktivitäts-Einrichtung 21 elektrische Spannung, um beispielsweise die Positionen der drei Spannbacken 6 zur Fixierung des Werkstückes 2 beizubehalten. Oftmals ist es jedoch erforderlich, dass die Elektromotoren 12 eine Positionsveränderung durchzuführen haben, um das Werkstück 2 erneut zentrisch einzuspannen. Für eine solche Positionsveränderung der Spannbacken 6 benötigen die drei Elektromotoren 12 zusätzliche Energie, die durch die Induktivitäts-Einrichtung 21 nicht bzw. nicht in ausreichender Größenordnung übertragen oder zur Verfügung gestellt werden kann.

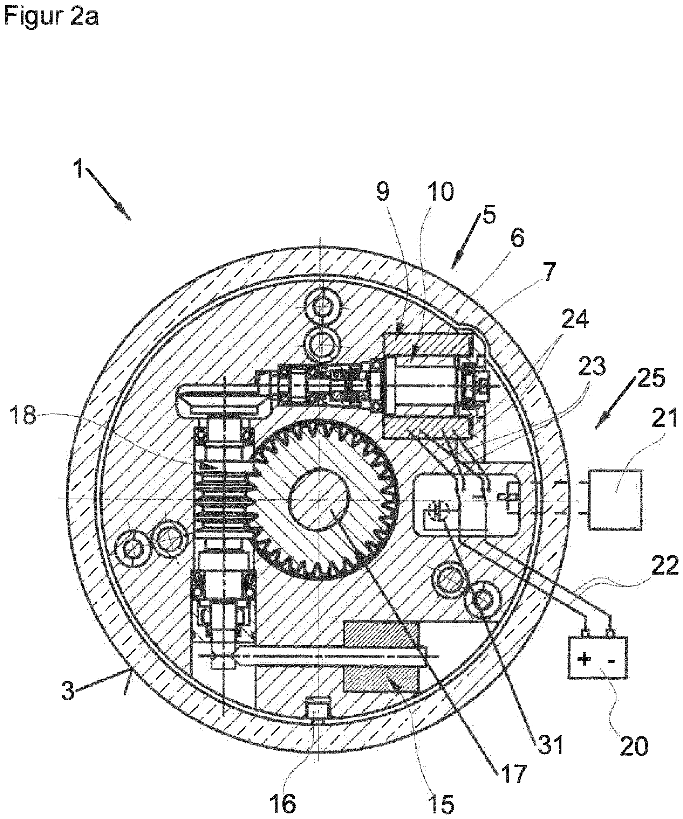

Gemäß Figur 2a ist in dem Futterkörper 3 für jeden der drei Elektromotoren 12 ein Akkumulator 31 als Energiespeichereinrichtung vorgesehen. Der jeweilige Akkumulator 31 ist dabei möglichst nahe zu der Längsachse 4 positioniert, um während des Rotationszustandes des Futterkörpers 3 eine möglichst geringe Fliehkraft zu erreichen. Je nach Ausgestaltung des Futterkörpers 3 kann erfindungsgemäss der jeweilige Akkumulator 31 auch exakt fluchtend zu der Längsachse 4 des Futterkörpers 3 oder positionell ausgerichtet sein, so dass keinerlei Fliehkräfte im Betriebszustand des Futterkörpers 3 auf die jeweiligen Akkumulatoren 31 einwirken.

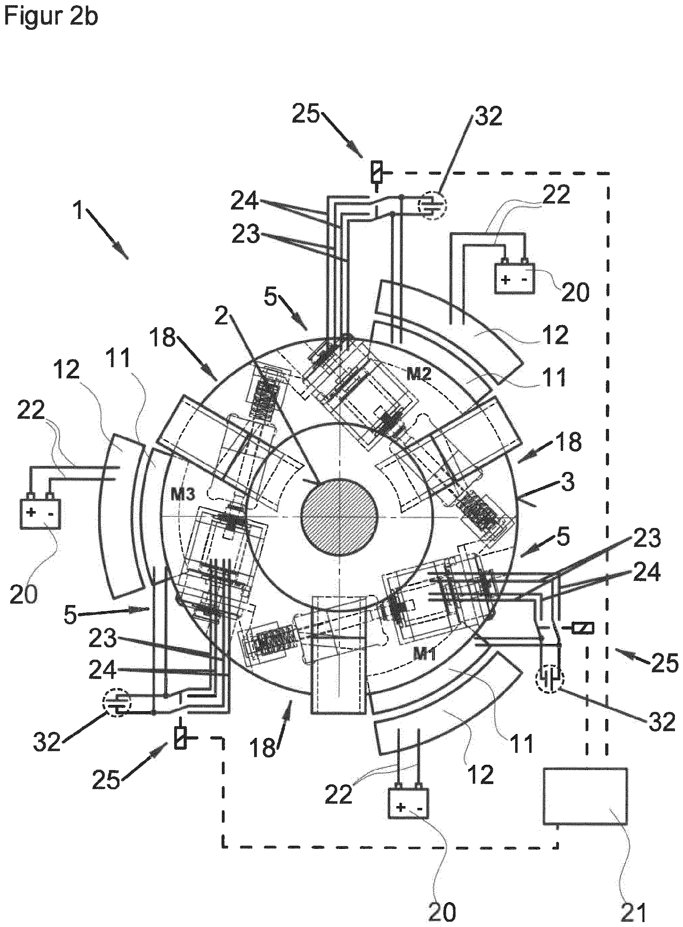

In Figur 2b ist gezeigt, dass in dem Futterkörpers 3 einer oder mehrerer Kondensatoren 32 als Energiespeichereinrichtung eingebaut sind, die Spannung speichern, um diese an die jeweiligen Elektromotoren 12 im Bedarfsfalle abgeben zu können.

Wenn demnach der Spannungsbedarf der Elektromotoren 12 gering ist, kann über die Induktivitäts-Einrichtung 21 entweder die Akkumulatoren 31 oder der Kondensator 32 aufgeladen bzw. mit Spannung versorgt sein. Durch die Akkumulatoren 31 und die Kondensatoren 32 können demnach Spannungsspitzen, die bei entsprechenden Betriebssituationen der Elektromotoren 12 anfallen, zur Verfügung gestellt werden.

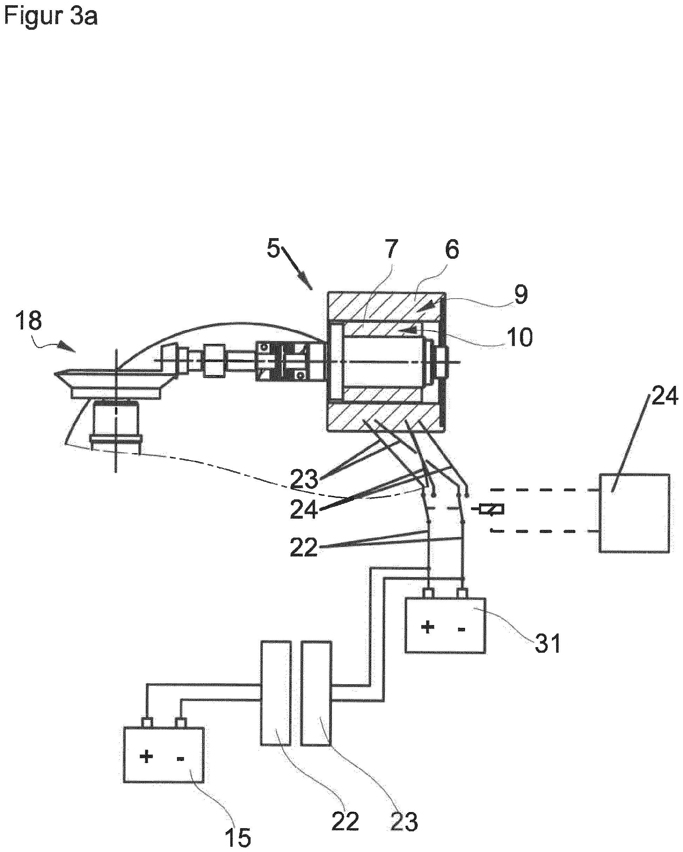

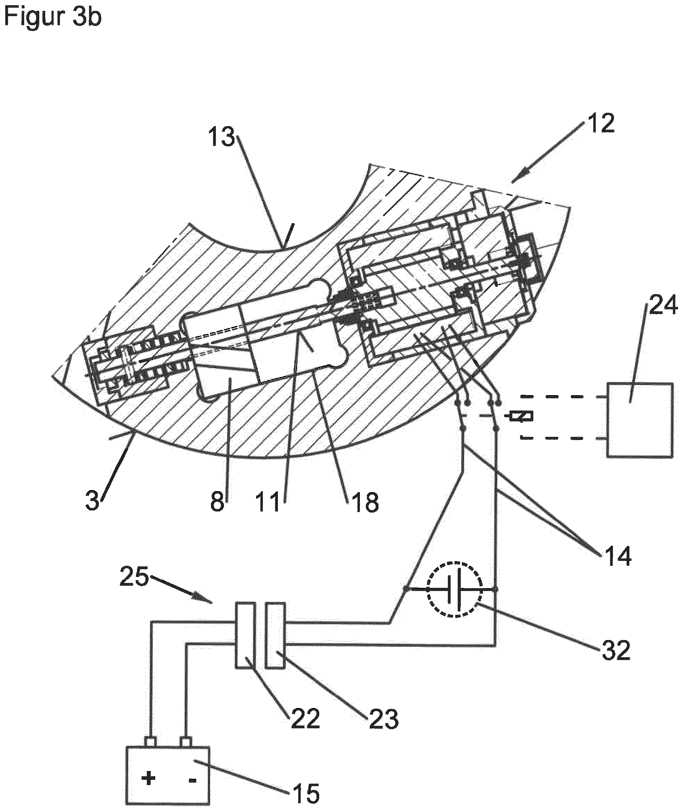

Aus den Figuren 3s und 3b ist ersichtlich, dass die Elektromotoren 12 über die elektrischen Leitungen 14 mit den Akkumulatoren 31 bzw. den Kondensatoren 32 gekoppelt sind. Darüber hinaus sind die Akkumulatoren 31 und die Kondensatoren 32 über die elektrischen Leitungen 14 mit der Induktivitäts-Einrichtung 21 verbunden. Während der Rotation des Futterkörpers 3 werden die Akkumulatoren 31 bzw. die Kondensatoren 32 über die Induktivitäts-Einrichtung 21 mit Spannung versetzt und aufgeladen. Da die Elektromotoren 12 lediglich die Spannkraft aufrecht erhalten und folglich einen geringen aufweisen, steht ausreichend zusätzliche Spannung zur Aufladung der Energiespeichereinrichtung zur Verfügung.

## Patentansprüche

1. Spann-Vorrichtung (1), insbesondere Spannfutter, zur Abstützung von vorzugsweise rotationssymmetrischen Werkstücken (2), die mittels einer Werkzeugmaschine zu bearbeiten sind,
bestehend aus:
- einem Futterkörper (3), an dem mindestens ein Druckstück (6) verschiebbar gelagert ist,
- aus einem Elektromotor (12), der trieblich mit dem jeweiligen Druckstück (6) unmittelbar oder über Zwischenglieder (8, 11) vereinzelt oder in einem Antriebsstrang verbunden ist und der im Inneren des Futterkörpers (3) angeordnet ist,
wobei der jeweilige Elektromotor im Stillstand des Spannfutters (1) über eine Steckverbindung (16) und elektrischen Leitungen (14) mit einer Stromquelle (15) oder im Rotations- und/oder Stillstandszustand des Spannfutters (1) über jeweils eine Induktivitäts-Einrichtung (21, 22, 23) mit der Stromquelle elektrisch gekoppelt ist, wobei in dem Futterkörper (3) mindestens eine Energiespeichereinrichtung (31, 32) vorgesehen ist, die elektrisch mit dem jeweiligen Elektromotor (12) verbunden ist, und wobei die jeweilige Energiespeichereinrichtung (31, 32) mit der Induktivitätseinrichtung (21, 22, 23) elektrisch gekoppelt ist,
**dadurch gekennzeichnet,**
**dass** die Energiespeichereinrichtung (31, 32) fluchtend zu der Längsachse (4) Futterkorpers des (3) angeordnet sind_{.}

2. Vorrichtung nach Anspruch 1,
**dadurch gekennzeichnet,**
**dass** die Energiespeichereinrichtung (31, 32) als Akkumulator (31) oder als Kondensator ausgeführt sind.

## Claims

1. A clamping device (1), in particular a clamping jaw, for supporting preferably rotationally symmetrical workpieces (2) which are to be machined using a machine tool,
consisting of:
- a chuck body (3) on which at least one pressure piece (6) is mounted in a moveable arrangement,
- an electric motor (12) which is connected in a driving arrangement with the corresponding pressure piece (6) either directly or via intermediate elements (8, 11), individually or within a driveline, and which is arranged inside the chuck body,
in which the electric motor in question is electrically coupled to a source of current (15) via a plug-and-socket connection (16) and electrical cables (14) when the clamping device (1) is stationary, or when the clamping device (1) is rotating and/or at a standstill, the electric motor is coupled to the source of current via an inductance device (21, 22, 23) in each case, the chuck body (3) containing at least one energy storage device (31, 32) which is electrically connected to the electric motor (12) in question, and with the corresponding energy storage device (31, 32) being electrically coupled to the inductance device (21, 22, 23),
**characterised in that**,
the energy storage device (31, 32) is arranged flush with the longitudinal axis (4) of the chuck body.

2. The device in accordance with Claim 1,
**characterised in that**,
the energy storage device (31, 32) is configured as a rechargeable battery (31) or as a capacitor.

## Revendications

1. Dispositif de serrage (1), en particulier un mandrin de serrage, servant à l'appui de pièces à usiner de préférence à symétrie de rotation (2) qui doivent être usinées à l'aide d'une machine-outil,
comprenant :
- un corps de mandrin (3) sur lequel il est logé, de manière glissant, au moins une pièce de pression (6),
- un moteur électrique (12) qui, directement ou par des organes intermédiaires (8, 11), individuellement ou par une chaîne d'entraînement, est en liaison d'entraînement avec la pièce de pression respective (6), et qui est prévu à l'intérieur du corps de mandrin (3),
où, lors de l'immobilisation du mandrin de serrage (1), le moteur électrique respectif est accouplé électriquement par un raccord à insertion (16) et par des lignes électriques (14) à une source de courant (15) ou qui est, à la rotation et/ou l'immobilisation du mandrin de serrage (1), accouplé électriquement par respectivement un équipement d'induction respectif (21, 22, 23), à la source de courant, où, dans le corps de mandrin (3), il est prévu au moins un équipement d'accumulation d'énergie (31, 32) qui est raccordé électriquement au moteur électrique respectif (12), et où l'équipement d'accumulation d'énergie respectif (31, 32) est accouplé électriquement à l'équipement d'induction respectif (21, 22, 23)
**caractérisé en ce que**
l'équipement d'accumulation d'énergie (31, 32) est prévu en alignement précis sur l'axe longitudinal (4) du corps de mandrin (3).

2. Dispositif d'après la revendication 1,
**caractérisé en ce que**
l'équipement d'accumulation d'énergie (31, 32) est conçu en tant qu'accumulateur (31) ou en tant que condensateur.
